# FASCICULE DE BREVET EUROPEEN

(11) **EP 3 004 687 B1**
(45) Date de publication et mention de la délivrance du brevet: **28.10.2020**
(21) Numéro de dépôt: 14731795.2
(22) Date de dépôt: 23.05.2014
(51) Int. Cl.: F16H 7/12

(54) **ENSEMBLE COMPORTANT UN SUPPORT FIXE, DES POULIES, UNE COURROIE ET UN TENDEUR DE COURROIE.**
ANORDNUNG MIT EINEM FESTEN TRÄGER, RIEMENSCHEIBEN, EINEM RIEMEN UND GURTSTRAFFER
ASSEMBLY COMPRISING A FIXED SUPPORT, PULLEYS, A BELT AND A BELT TENSIONER

(30) Priorité: 30.05.2013 FR 1354929
(43) Date de publication de la demande: 13.04.2016
(73) Titulaire: Hutchinson, 75008 Paris (FR)
(72) Inventeur: AUBERTIN, Yannick, F-37520 La Riche (FR); VOULGARIS, Dimitri, F-37800 Nouatre (FR)
(74) Mandataire: Gevers & Orès
(86) Numéro de dépôt international: PCT/IB2014/061662
(87) Numéro de publication internationale: WO 2014/191882

(56) Documents cités:
- FR-A1- 2 715 982
- US-A- 3 374 686
- US-A1- 2006 217 223
- US-B1- 7 481 206

## Description

La présente invention concerne un ensemble comportant un support fixe tel qu'un bloc moteur, des poulies montées à rotation sur le support, une courroie montée sur tes poulies et un tendeur pour la courroie.

Plus particulièrement, l'invention concerne un tel ensemble dans lequel le tendeur est apte à tourner par rapport au support, selon un sens de rotation prédéfini, entre une position de repos dans laquelle le tendeur est éloigné de la courroie et une position de fonctionnement dans laquelle le tendeur est en contact avec la courroie, étant précisé que, dans la position de fonctionnement, la courroie exerce sur le tendeur une force dont la direction tend à faire tourner te tendeur dans ce même sens de rotation prédéfini.

Dans ce type d'ensemble, le tendeur passe de sa position de repos à sa position de fonctionnement selon les étapes suivantes.

En position de repos, le tendeur est éloigné de la courroie (pas de contact).

On fait tourner le tendeur selon ce sens de rotation prédéfini (sens anti-horaire par exemple) jusqu'à ce qu'il soit en contact avec la courroie (point de contact).

On continue alors à faire tourner le tendeur dans ce sens de rotation prédéfini, généralement à l'aide d'un outil. La courroie exerce alors une force sur le tendeur, en réaction à la force appliquée par le tendeur sur celle-ci, qui tend à repousser le tendeur vers sa position de repos. Cette force tend donc à faire tourner le tendeur dans le sens opposé au sens de rotation prédéfini (donc dans le sens horaire si l'on reprend l'exemple).

On continue alors de faire tourner le tendeur dans le sens de rotation prédéfini jusqu'à atteindre un point de bascule.

En deçà de ce point de bascule, la force de réaction exercée par la courroie augmente et tend à ramener le tendeur vers sa position de repos, en agissant toujours dans le sens opposé au sens de rotation prédéfini

Toutefois, au-delà de ce point de bascule, la force exercée par la courroie sur le tendeur agit pour faire tourner le tendeur dans le sens de rotation prédéfini (sens anti-horaire si l'on reprend l'exemple). Ainsi, au-delâ du point de bascule, il n'est plus nécessaire d'exercer une force pour faire tourner le tendeur dans le sens de rotation prédéfini, car l'ensemble lui-même agit automatiquement pour faire basculer le tendeur depuis la position de bascule vers la position de fonctionnement.

Une butée est alors prévue pour empêcher le tendeur de tourner dans le sens de rotation prédéfini au-delà de sa position de fonctionnement. La butée définit donc la position de fonctionnement du tendeur.

Le point de bascule est parfois identifié comme un « toggle point » dans la littérature anglo-saxonne. Pour cette raison, ce type d'ensemble est parfois qualifié d' « overtoggling » dans la littérature anglo-saxonne.

Ce type d'ensemble est particulièrement intéressant car il permet de mettre le tendeur dans sa position de fonctionnement aisément avec un outil (bras de levier par exemple) qui peut être actionné à une main. Une fois le point de bascule atteint, tout s'effectue automatiquement, sans effort supplémentaire pour l'installateur. Il est tout particulièrement employé avec des courroies élastiques pour lesquelles il est encore plus aisé d'atteindre le point de basculement.

Un tel ensemble est par exempte proposé dans le document EP 1 317 635.

La plaque du tendeur est ici montée sur le support fixe (bloc moteur) par l'intermédiaire d'un axe de pivotement fixe. Sur cet axe de pivotement fixe, on assure alors à la fois la fixation du tendeur sur le support fixe et la fonction de pivot permettant au tendeur de pivoter par rapport au support fixe.

Le moyen d'articulation est donc complexe.

De plus, pour s'assurer que l'ensemble pourra permettre le passage du tendeur au-delà du point de bascule, l'axe de pivotement fixe doit être judicieusement installé sur le support fixe, le tendeur définissant dans son parcours entre sa position de repos et sa position de fonctionnement un arc de cercle.

Cette installation n'est pas toujours aisée, car elle nécessite de laisser de la place au tendeur dans son parcours d'installation.

Elle est même parfois impossible en raison de l'encombrement local, lié à d'autres contraintes de conception relatives au bloc moteur.

Un objectif de l'invention est de proposer un ensemble du type précité présentant un tendeur de conception simplifiée.

Un autre objectif de l'invention est de proposer un ensemble du type précité, présentant un tendeur de conception simplifiée et moins sensible aux contraintes de place imposées par les autres éléments de l'ensemble ou d'autres éléments montés sur le bloc moteur.

Pour résoudre l'un au moins de ces objectifs, l'invention propose un ensemble comportant les caractéristiques de la revendication 1.

Cet ensemble pourra également présenter l'une au moins des caractéristiques suivantes, prise seule ou en combinaison :
- la lumière fermée présente l'une des formes suivantes : forme en V, forme comportant au moins une partie courbée et une partie linéaire, forme courbée ne définissant pas un arc de cercle, par exemple une forme spiralée, forme comportant au moins deux parties courbées, par exemple une formée trilobée ;
- la lumière fermée présente une forme en arc de cercle ;
- l'ensemble prévoit au moins deux moyens pour coopérer avec la lumière fermée, chaque moyen de coopération étant fixe par rapport au support lorsque la lumière fermée est située sur la plaque ou fixe par rapport à la plaque lorsque la lumière fermée est située sur le support ;
- l'ensemble comprend au moins deux lumières fermées disposées sur la plaque ou sur le support ;
- les deux lumières fermées sont agencées de sorte que lorsque le tendeur tourne par rapport au support entre sa position de repos et sa position de fonctionnement, le mouvement de rotation réalisé par le tendeur n'est pas circulaire ;
- tes deux lumières fermées présentent des formes différentes, par exemple une forme courbée pour la première lumière fermée et une forme rectiligne pour la deuxième lumière fermée ;
- l'ensemble prévoit au moins un moyen pour coopérer avec chaque lumière fermée, chaque moyen de coopération étant fixe par rapport au support lorsque chaque lumière fermée est située sur la plaque ou fixe par rapport à la plaque lorsque chaque lumière fermée est située sur le support ;
- les moyens pour empêcher le tendeur de tourner dans le sens de rotation prédéfini au-delà de sa position de fonctionnement comprennent une butée formée par une extrémité de la ou de l'une au moins des lumière(s) fermée(s), laquelle bloque tout mouvement du moyen de coopération avec la lumière fermée ;
- l'ensemble comprend, en outre, une lumière ouverte disposée sur la plaque, le fond de cette lumière ouverte formant alors une butée apte à coopérer avec un moyen de coopération pour cette lumière ouverte, prévu sur le support fixe ;
- l'ensemble comprend au moins un moyen pour fixer la position de la plaque du tendeur par rapport au support, lorsque le tendeur est en position de fonctionnement ;
- le moyen pour fixer cette position comprend le, chaque ou, selon le cas, l'un au moins des moyens de coopération avec la ou chaque lumière fermée ou la lumière ouverte ;
- pour fixer cette position, il est prévu un moyen de fixation autre qu'un moyen de coopération avec la ou chaque lumière fermée ou la lumière ouverte, ce moyen de fixation traversant par exempte la plaque au niveau de l'axe de rotation fixe de l'élément rotatif par rapport à la plaque et s'insérant dans le support.

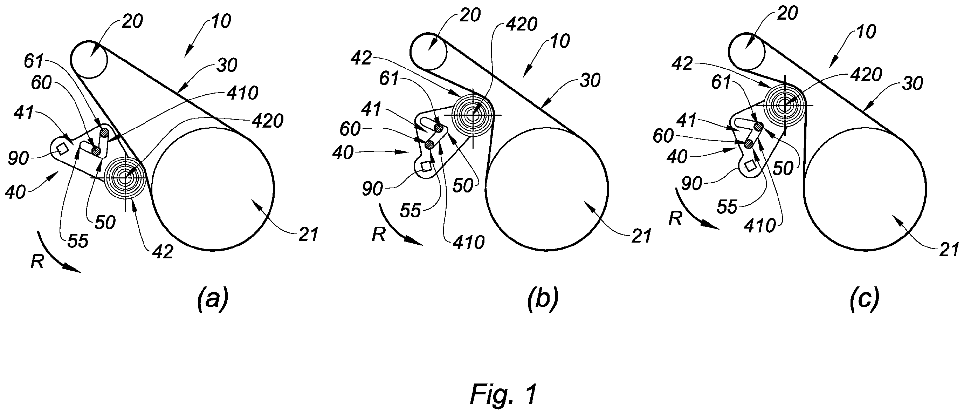

L'invention sera mieux comprise et d'autres buts, avantages et caractéristiques de celle-ci apparaîtront plus clairement à la lecture de la description qui suit et qui est faite au regard des dessins annexés, sur lesquels
- les figures 1(a), 1(b) et 1(c) représentent, selon des vues de face, un ensemble comportant un bloc moteur en tant que support fixe, des poulies montées à rotation sur le support, une courroie montée sur les poulies et un tendeur comportant une plaque et un élément rotatif monté sur la plaque par l'intermédiaire d'un axe de rotation fixe par rapport à cette plaque, lorsque le tendeur est mis en contact avec la courroie sur fa figure 1(a), lorsque le tendeur est en position de fonctionnement sur la figure 1 (c) et dans une position intermédiaire sur la figure 1(b) ;

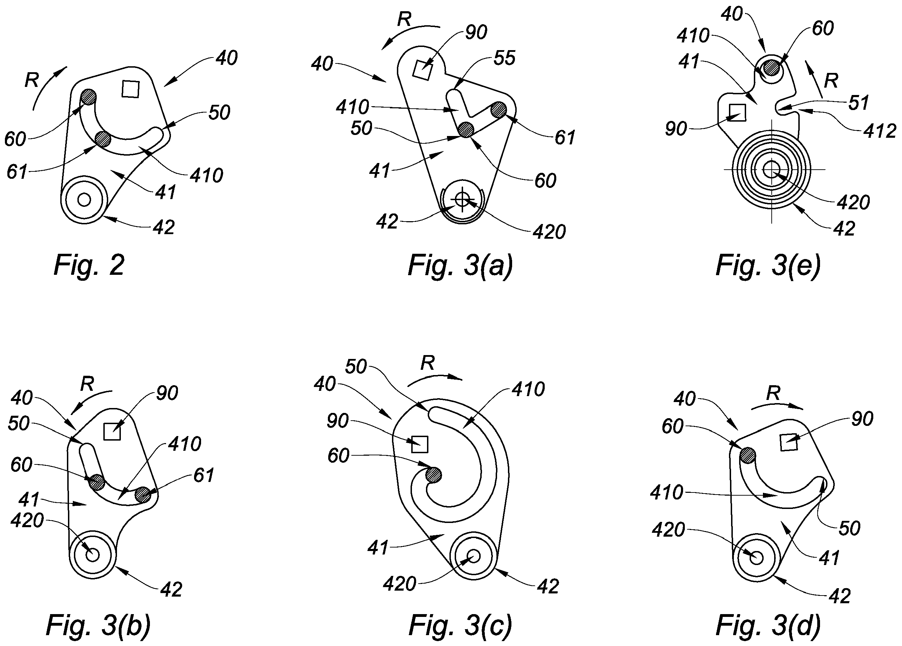

- la figure 2 représente, selon une vue de face partielle, un ensemble conforme à l'invention, cette vue partielle montrant un tendeur comportant une lumière fermée en forme d'arc de cercle et des moyens de coopération avec la lumière, ces moyens étant montés fixes par rapport au bloc moteur ;
- les figures 3(a) à 3(e) représentent, selon des vues de face partielles, différentes variantes de l'ensemble conforme à l'invention, ces vues partielles montrant différents tendeurs comportant chacun une lumière fermée de forme variée et des moyens de coopération avec la lumière, ces moyens étant montés fixes par rapport au bloc moteur ;

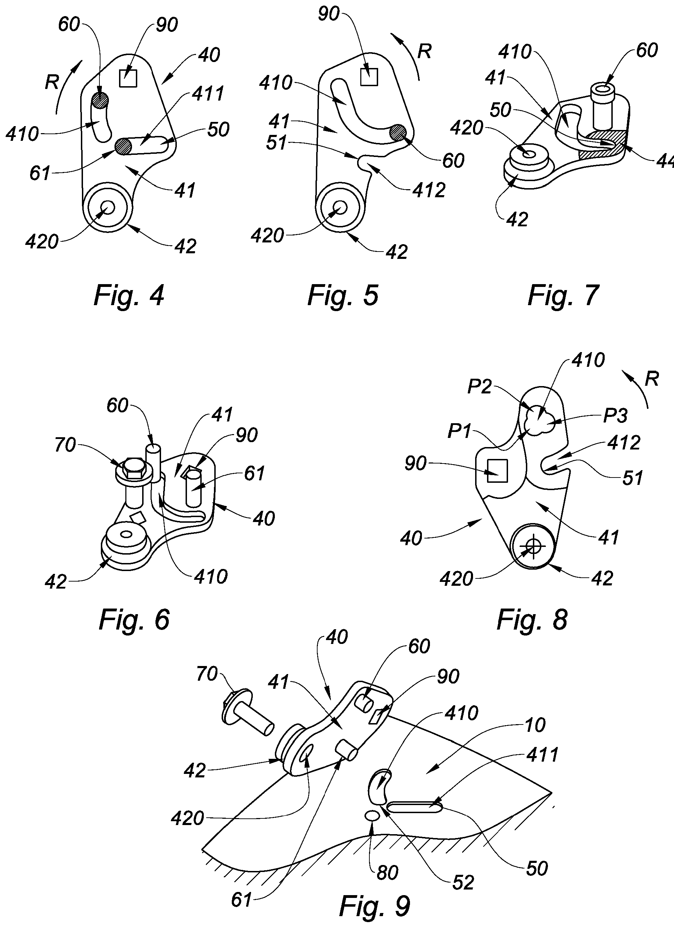

- la figure 4 représente, selon une vue de face partielle, un ensemble conforme à l'invention, cette vue partielle montrant un tendeur comportant deux lumières fermées un moyen de coopération avec chaque lumière, chaque moyen de coopération étant monté fixe par rapport au bloc moteur ;
- la figure 5 représente une variante de l'ensemble conforme à l'invention qui est partiellement représenté sur la figure 3(b), variante pour laquelle il est prévu, en outre, une lumière ouverte ;
- la figure 6 représente, selon une vue en perspective, une variante de l'ensemble conforme à l'invention qui est partiellement représenté sur la figure 3(b), variante pour laquelle il est prévu, en outre. un moyen de fixation du tendeur sur le bloc moteur destiné à être serré lorsque le tendeur est en position de fonctionnement ;
- la figure 7 représente, selon une vue en perspective, une variante de l'ensemble conforme à l'invention qui est partiellement représenté sur la figure 3(b), variante pour laquelle il est prévu, en outre, un zone épaissie entourant une extrémité de la lumière fermée pour assurer la fixation d'un moyen de coopération par rapport au tendeur et ainsi assurer ta fixation du tendeur sur le bloc moteur ;
- fa figure 8 représente, selon une vue de face, une variante de l'ensemble conforme à l'invention qui est partiellement représenté sur la figure 5, variante pour laquelle la lumière fermée présente la forme d'un trilobe ;
- la frgure 9 représente, selon une vue en perspective, une variante de l'ensemble conforme à l'invention qui est partiellement représenté sur ta figure 4, variante pour laquelle les lumières fermées sont formées dans le bloc moteur et le moyen de coopération avec chaque lumière fermée appartient à la plaque du tendeur ;

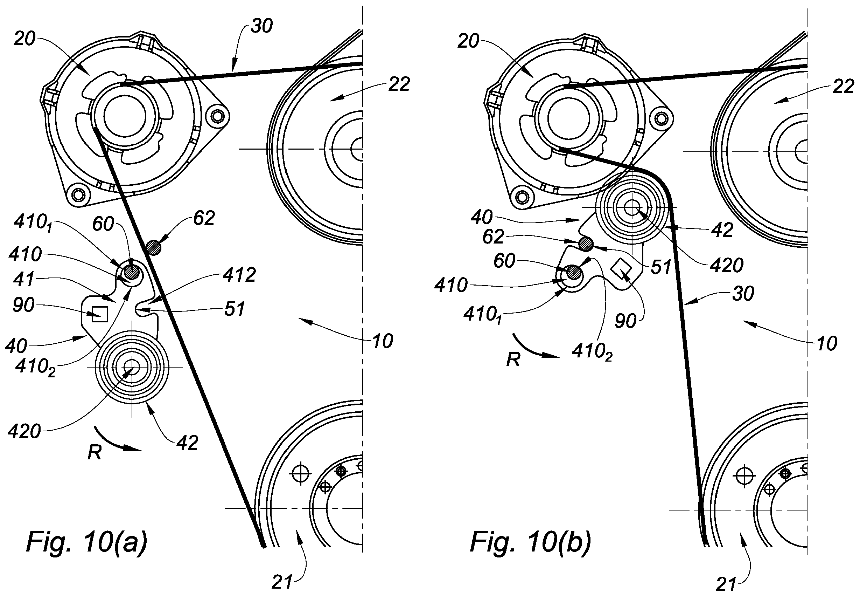

- les figures 10(a) et 10(b) représentent, selon des vues de face, te tendeur représenté sur la figure 3(e) lorsque ce dernier est monté sur un bloc moteur comportant en l'occurrence trois poulies par laquelle passe la courroie.

Un ensemble conforme à l'invention est par exempte représenté sur les figures 1(a) à 1(c).

Cet ensemble comporte un support fixe 10 tel qu'un bloc moteur, une pluralité de poulies 20, 21 montées à rotation sur le support 10 et une courroie 30 montée sur lesdites poulies 20, 21.

Cet ensemble comprend également un tendeur 40 pour la courroie 30 qui comporte une plaque 41 et un élément rotatif 42 monté sur la plaque 41 par l'intermédiaire d'un axe de rotation fixe 420 par rapport à cette plaque 41 .

Le tendeur 40 est apte à tourner par rapport au support 10, selon le sens de rotation R, entre la position de repos dans laquelle l'élément rotatif 42 est éloigné de la courroie 30 et une position de fonctionnement, dans laquelle t'élément rotatif 42 est en contact avec la courroie 30.

Sur la figure 1(a), le tendeur 40 est mis en contact avec la courroie 30 pour la première fois (position intermédiaire entre la position de repos et la position de fonctionnement). Sur la figure 1(c), le tendeur 40 est en position de fonctionnement. Sur la figure 1(b), on a représenté une position intermédiaire entre la position représentée sur la figure 1(a) et la position représentée sur la figure 1(c). Le sens de rotation du tendeur 40 lors du montage, noté R, est en l'occurrence anti-horaire.

On note que le tendeur représenté sur les figures 1(a) à 1(c) correspond à celui qui est représenté, en position de repos, sur la figure 3(a),

Dans le cadre de l'invention, les différents éléments de l'ensemble selon l'invention sont positionnés de sorte que la courroie 30 exerce, sur l'élément rotatif 42 et lorsque le tendeur 40 est en position de fonctionnement, une force dont la direction tend à faire tourner le tendeur 40 dans ce même sens de rotation prédéfini R (point de bascule dépassé). Au contraire, dans la position représentée sur la figure 1(a), le point de bascule n'est pas dépassé si bien que la courroie 30 exerce, sur le tendeur 40, une force dont la direction tend à faire tourner le tendeur 40 dans le sens contraire au sens de rotation prédéfini R. Enfin, dans la position représentée sur la figure 1(b), le tendeur 40 se situe sensiblement au niveau du point de bascule.

En raison de ce fonctionnement, l'ensemble prévoit également au moins une butée, en l'occurrence une butée 50 sur tes figures 1(a) à 1(c), pour empêcher le tendeur 40 de tourner dans le sens de rotation R au-delà de sa position de fonctionnement

La butée 50 définit donc la position de fonctionnement du tendeur, en interagissant en l'occurrence avec un moyen 61 se présentant sous la forme d'un pion fixé sur le bloc moteur 10.

L'ensemble peut alors fonctionner normalement.

Toutefois, pour plus de sécurité, il est envisageable de prévoir au moins un moyen pour fixer la position de la plaque 41 du tendeur 40 par rapport au bloc moteur 10, lorsque le tendeur 40 est en position de fonctionnement Cela empêche tout retour en arrière éventuel du tendeur 40, à savoir dans le sens contraire au sens défini par la flèche R, qui serait par exemple lié à un à-coup sur la courroie 30 pendant que le moteur tourne. Différents moyens pour fixer la plaque 41 sur le bloc moteur 10 seront décrits ultérieurement.

Pour faire tourner le tendeur 40 par rapport au bloc moteur 10 entre la position de repos et la position de fonctionnement du tendeur, l'ensemble comprend une lumière fermée 410 disposée sur la plaque 41 du tendeur 40 ainsi que des moyens 60, 61, en l'occurrence des pions, pour coopérer avec la lumière fermée 410, chaque moyen de coopération 60, 61 étant fixe par rapport au bloc moteur 10.

A partir de la position de repos (non représentée), c'est le pion 61 qui sert d'axe de rotation.

Puis, l'autre pion 60 se translate le long d'un bras en V de la lumière fermée 410 (figure 1(a)) jusqu'à atteindre une butée 55 (figure 1(b)). Dans le même temps, le pion 61 se translate le long de l'autre bras du V formant la lumière fermée 410. En effet, les pions 60, 61 étant fixés sur le support 10, la distance les séparant reste constante pendant tout le mouvement de montage du tendeur 40. Il en résulte une rotation dont l'axe de rotation n'est pas un axe de rotation physique et qui, par ailleurs, change tout te temps pendante cette phase du montage du tendeur 40 sur la courroie 30. Une fois la butée 55 atteinte par le pion 60, nous sommes sensiblement au niveau du point de bascule (figure 1(b)).

Enfin, après passage du point de bascule, le pion 60 fait office d'axe de rotation et le pion 61 se translate dans l'autre bras en V jusqu'à atteindre la butée 50, laquelle définit la position de fonctionnement.

Une seule lumière fermée 410 peut être prévue sur la plaque 41 du tendeur 40 ou, selon le cas, sur le support fixe 10, par exemple formée par le bloc moteur.

Une seule lumière fermée 410 est par exemple prévue sur la plaque 41 du tendeur 40 sur les figures 2, 3(a) à 3(e), 5 à 8.

Sur la figure 2, la lumière fermée 410 est en forme d'arc de cercle.

Sur la figure 3(a), la lumière fermée 410 est en forme de V. La lumière fermée en V peut alors avoir une largeur constante ou présenter une première partie d'une première largeur et une deuxième partie d'une deuxième largeur, supérieure ou inférieure à la largeur de la première partie. La lumière fermée 410 en forme de V présentant des parties de largeurs distinctes est par exempte représenté sur les figures 1 (a) à 1(c).

Sur la figure 3(b), la lumière fermée 410 présente une première partie rectiligne et une deuxième partie courbée qui peut par exemple être en forme d'arc de cercle.

Une variante de la figure 3(b) pourrait consister à prévoir une première partie courbée et une deuxième partie rectiligne.

Sur la figure 3(c), la lumière fermée 410 est de forme spiralée.

Sur fa figure 3(d), la lumière fermée 410 présente une première partie courbée, par exempte en forme d'arc de cercle, une deuxième partie rectiligne et une troisième partie courbée, par exemple en forme d'arc de cercle.

Sur la figure 3(e), la lumière fermée 410 présente une forme elliptique.

Le tendeur de ta figure 3(e) est par ailleurs représenté sur les figures 10(a) et 10(b) dans son environnement, à savoir un bloc moteur sur lequel sont montées trois poulies 21, 22, 23 par lesquelles passe la courroie 30 sur laquelle le tendeur 40 est destiné à agir. Sur la figure 10(a), le tendeur 40 est en position de repos et sur la figure 10(b), le tendeur 40 est en position de fonctionnement, donc au-delà du point de bascule (« toggle point » selon la terminologie anglo-saxonne).

En position de repos, le moyen 60, en l'occurrence un pion monté fixe sur le bloc moteur 10 est situé contre une première extrémité de la lumière fermée 410. En position de fonctionnement, ce pion 60 est situé contre l'autre extrémité de la lumière fermée 410 et par ailleurs, te fond de la lumière ouverte 412 forme une butée 51 venant contre un moyen de coopération 62 avec la lumière ouverte 412, ce moyen 62 étant monté fixe sur te bloc moteur 10 et se présentant par exemple sous la forme d'un pion.

La forme de la lumière fermée 410 représentée sur la figure 3(b) est reprise sur les figures 5 à 7.

Quant à la figure 8, elle représente une lumière fermée 410 en forme de trilobé.

Plusieurs lumières fermées 410, 411 peuvent également être envisagées. C'est par exemple le cas sur les variantes de réalisation représentées sur la figure 4 (lumières fermées sur la plaque 41 du tendeur 40) ou la figure 9 (lumières fermées sur le support fixe 10). Il convient de noter que l'agencement des lumières fermées 410, 411 proposées sur les figures 4 ou 9 revient à la forme proposée en variante de celle qui est représentée sur la figure 3(b), à savoir une première partie courbée et une deuxième partie rectiligne.

Pour assurer la rotation du tendeur 40 lors de son montage vers sa position de fonctionnement, on peut envisager un ou plusieurs moyens 60, 61 de coopération avec la ou chaque lumière fermée 410, 411.

Par exemple, un moyen de coopération 60 est représenté sur les figures 3(c), 3(d), 5 ou 7.

Deux moyens de coopération 60, 61 sont représentés par exemple sur les figures 2, 3(a), 3(b) et 6.

Il convient cependant de noter qu'un seul moyen de coopération pourrait être prévu avec les formes de lumière fermée 410 proposées sur ces figures 2, 3(a), 3(b) et 6.

Par ailleurs, il convient de noter que deux moyens de coopération du type de ceux représentés sur les figures 2, 3(a), 3(b) et 6 pourrait être envisagés pour les formes représentées sur les figures 3(c), 3(d), 5 ou 7.

Un seul moyen de coopération 60 laisse plus de liberté dans le mouvement relatif entre le tendeur 40 et le support fixe 10, ce qui peut être avantageux dans certains cas à cause de l'encombrement lié à l'environnement du bloc moteur. Toutefois, deux moyens de coopération 60, 61 permettent d'assurer un meilleur guidage, ce qui rend le montage plus aisé.

Sur la figure 3(e), la forme elliptique de la lumière fermée 410, par ailleurs peu étendu, favorise l'utilisation d'un seul moyen de coopération 60.

De même, pour la forme en trilobe représentée sur la figure 8, l'utilisation d'un seul moyen de coopération (non représenté, mais correspond au moyen 60 représenté sur les autres figures annexées) est plus adapté. Dans ce cas, l'interaction entre le premier lobe et le moyen de coopération correspondra avantageusement à la position de repos du tendeur 40 (position P1), l'interaction entre le deuxième lobe et le moyen de coopération correspondra avantageusement à la position de premier contact du tendeur 40 avec la courroie (position P2; cf. également figure 1(a)) et enfin, l'interaction entre le troisième lobe et le moyen de coopération correspondra avantageusement à la position de fonctionnement du tendeur 40.

lorsque deux lumières fermées 410, 411 sont prévues (figures 4 ; 9), il est naturel de prévoir un moyen de coopération 60, 61 pour chaque lumière fermée 410, 411.

Comme cela a été mentionné précédemment, il est avantageux, bien que non obligatoire, de prévoir un moyen pour fixer la plaque 41 du tendeur 40 au support fixe 10 (bloc moteur, par exemple).

Ceci peut être réalisé en faisant en sorte que le, chaque ou l'un au moins des moyens de coopération 60, 61 se présente sous la forme d'une vis, boulon ou moyen équivalent qui sert alors non seulement au guidage avec la lumière fermée mais également au serrage.

En variante, et comme représenté par exemple sur la figure 7, on peut envisager que le moyen de coopération soit un simple pion et que la plaque 41 prévoit un moyen 44 pour épaissir la plaque au niveau de l'extrémité de la lumière fermée 410 servant de butée 50. La fixation s'effectue alors par coincement.

En variante également le ou chaque moyen de coopération 60, 61 avec la lumière fermée 410, 411 correspondante peut être dédié à cette seule fonction.

Dans ce cas, il faut prévoir un moyen 70 spécifique pour assurer le serrage de la plaque 41 au support fixe 10. Un tel moyen 70, en l'occurrence un boulon, est par exemple proposé sur les figures 6 et 9 annexées.

Sur la figure 6, le boulon 70 traverse alors la plaque 41 et vient s'insérer dans un orifice (non représenté) prévu sur le support fixe 10.

Sur la figure 9, on a la même chose, à la différence que le boulon 70 traverse la plaque 41 au niveau de l'axe de rotation fixe 420 de l'élément rotatif 42 par rapport à la plaque 41. Il vient alors se loger dans un orifice 80 prévu dans le support fixe 10. Dans ce cas, le boulon 70 n'empêche bien entendu pas l'élément rotatif 42 de tourner par rapport à la plaque 41 du tendeur 40,

Selon une autre variante, l'un 61 des moyens 60, 61 de coopération peut s'insérer dans une lumière ouverte 412 prévue sur la plaque 41 du tendeur 40. Une lumière ouverte 412 sera avantageusement prévue lorsque la lumière fermée 410 présente une forme laissant une grande liberté de mouvement au moyen de coopération 60. C'est par exemple fe cas sur les figures 3(e), 10(a) et 10(b), ou cet autre moyen de coopération est un pion 61 fixé sur le bloc moteur 10 ou sur les figures 5 et 8 (sur lesquelles l'autre moyen de coopération 61 n'est pas représenté).

Pour le montage, le sens de rotation R peut être choisi pour être horaire ou anti-horaire. Ce choix dépend des contraintes d'espace rencontrées sur le bloc moteur 10 et/ou du mode d'installation du tendeur, lequel peut être mis en contact avec la face interne de fa courroie 30 ou la face externe de la courroie 30. Sur les figures 1(a) et 1(b), le tendeur 40 est en l'occurrence en contact avec la face externe de la courroie 30.

Il convient de noter que le tendeur 40 prévoit généralement un orifice 90 permettant l'introduction d'un outil de montage (bras de levier) facilitant le montage du tendeur 40 sur la courroie 30.

Quelles que soient les variantes de l'invention, l'articulation entre le tendeur 40 et le support fixe 10 (bloc moteur par exemple) s'effectue de manière simple en prévoyant une lumière fermée et un moyen de coopération avec cette lumière fermée.

Par ailleurs, pour l'ensemble des modes de réalisation décrits, à l'exception de celui de la figure 2 lorsque deux moyens de coopération 60, 61 sont prévus, le mouvement réalisé par le tendeur entre sa position de repos et sa position de fonctionnement n'est pas un arc de cercle. On peut donc prévoir un mouvement bien plus libre qui permet de s'affranchir de certaines contraintes d'encombrement liées à l'environnement du support fixe/bloc moteur.

Cette liberté est encore accrue lorsqu'un seul moyen de coopération 60 est prévu avec la lumière fermée 410.

## Revendications

1. Ensemble comportant :
- un support fixe (10) tel qu'un bloc moteur,
- une pluralité de poulies (20, 21, 22) montées à rotation sur le support (10),
- une courroie (30) montée sur lesdites poulies (20, 21, 22),
- un tendeur (40) comportant :
∘ une plaque (41),
∘ un élément rotatif (42) monté sur la plaque (41) par l'intermédiaire d'un axe de rotation fixe (420) par rapport à cette plaque,
le tendeur (40) étant apte à tourner par rapport au support (10), selon un sens de rotation prédéfini (R), entre une position de repos dans laquelle l'élément rotatif (42) est éloigné de la courroie (30) et une position de fonctionnement dans laquelle l'élément rotatif (42) est en contact avec la courroie (30), étant précisé que, dans la position de fonctionnement, la courroie (30) exerce sur l'élément rotatif (42) une force dont la direction tend à faire tourner le tendeur (40) dans ce même sens de rotation prédéfini (R);
- des moyens (50, 51, 61, 60, 62) pour empêcher le tendeur (40) de tourner dans le sens de rotation prédéfini (R) au-delà de sa position de fonctionnement ;
**caractérisé en ce que**, pour faire tourner le tendeur (40) par rapport au support (10) entre la position de repos et la position de fonctionnement du tendeur, l'ensemble comprend :
- au moins une lumière fermée (410, 411) disposée sur la plaque (41) du tendeur (40) ou sur le support (10), la lumière fermée (410) présentant une forme agencée de sorte que lorsque le tendeur (40) tourne par rapport au support (10) entre sa position de repos et sa position de fonctionnement, le mouvement de rotation réalisé par le tendeur (40) n'est pas circulaire ;
- au moins un moyen (60, 61) pour coopérer avec la ou chaque lumière fermée (410, 411), ce moyen de coopération (60, 61) étant fixe par rapport au support (10) lorsque la lumière fermée (410, 411) est située sur la plaque (41) ou fixe par rapport à la plaque (41) lorsque la lumière fermée est située sur le support.

2. Ensemble selon la revendication 1, **caractérisé en ce que** la lumière fermée (410) présente l'une des formes suivantes: forme en V, forme comportant au moins une partie courbée et une partie linéaire, forme courbée ne définissant pas un arc de cercle, par exemple une forme spiralée, forme comportant au moins deux parties courbées, par exemple une formée trilobée.

3. Ensemble selon l'une des revendications précédentes, **caractérisé en ce qu'**il est prévu au moins deux moyens (60, 61) pour coopérer avec la lumière fermée (410), chaque moyen de coopération (60, 61) étant fixe par rapport au support (10) lorsque la lumière fermée (410) est située sur la plaque (41) ou fixe par rapport à la plaque (41) lorsque la lumière fermée (410) est située sur le support (10).

4. Ensemble selon la revendication 1, **caractérisé en ce qu'**il comprend au moins deux lumières fermées (410, 411) disposées sur la plaque (41) ou sur le support (10).

5. Ensemble selon la revendication précédente, **caractérisé en ce que** les deux lumières fermées (410, 411) sont agencées de sorte que lorsque le tendeur (40) tourne par rapport au support (10) entre sa position de repos et sa position de fonctionnement, le mouvement de rotation réalisé par le tendeur (40) n'est pas circulaire.

6. Ensemble selon l'une des revendications 4 ou 5, **caractérisé en ce que** les deux lumières fermées (410, 411) présentent des formes différentes, par exemple une forme courbée pour la première lumière fermée et une forme rectiligne pour la deuxième lumière fermée.

7. Ensemble selon l'une des revendications 4 à 6, **caractérisé en ce qu'**il est prévu au moins un moyen (60, 61) pour coopérer avec chaque lumière fermée (410, 411), chaque moyen de coopération (60, 61) étant fixe par rapport au support (10) lorsque chaque lumière fermée (410, 411) est située sur la plaque (41) ou fixe par rapport à la plaque (41) lorsque chaque lumière fermée (410, 411) est située sur le support (10).

8. Ensemble selon l'une des revendications précédentes, **caractérisé en ce que** les moyens (50, 51, 60, 61) pour empêcher le tendeur (40) de tourner dans le sens de rotation prédéfini (R) au-delà de sa position de fonctionnement comprennent une butée (50) formée par une extrémité de la ou de l'une au moins des lumière(s) fermée(s) (410, 411), laquelle bloque tout mouvement du moyen de coopération (60, 61) avec la lumière fermée.

9. Ensemble selon l'une des revendications 1 à 7, **caractérisé en ce qu'**il comprend, en outre, une lumière ouverte (412) disposée sur la plaque (41), le fond de cette lumière ouverte formant alors une butée (51) apte à coopérer avec un moyen de coopération (62) pour cette lumière ouverte, prévu sur le support fixe (10).

10. Ensemble selon l'une des revendications précédentes, **caractérisé en ce qu'**il comprend au moins un moyen (60, 61, 62, 70) pour fixer la position de la plaque (41) du tendeur (40) par rapport au support (10), lorsque le tendeur (40) est en position de fonctionnement.

11. Ensemble selon la revendication précédente, **caractérisé en ce que** le moyen pour fixer cette position comprend l'un au moins des moyens de coopération (60, 61, 62) avec la ou chaque (410, 411) lumière fermée ou avec la lumière ouverte (412).

12. Ensemble selon l'une des revendications 10 ou 11, **caractérisé en ce que**, pour fixer cette position, il est prévu un moyen de fixation (70) autre qu'un moyen de coopération avec la ou chaque lumière fermée ou la lumière ouverte, ce moyen de fixation (70) traversant par exemple la plaque (41) au niveau de l'axe de rotation fixe (420) de l'élément rotatif (42) par rapport à la plaque (41) et s'insérant dans le support (10).

## Patentansprüche

1. Anordnung, umfassend:
- einen festen Träger (10), wie einen Motorblock,
- eine Vielzahl von Riemenscheiben (20, 21, 22), die drehbar am Träger (10) montiert sind,
- einen Riemen (30), der an den Riemenscheiben (20, 21, 22) montiert ist,
- einen Spanner (40), umfassend:
• eine Platte (41),
• ein Drehelement (42), das an der Platte (41) über eine bezogen auf diese Platte feste Drehachse (420) montiert ist,
wobei der Spanner (40) in der Lage ist, sich in einer vorgegebenen Drehrichtung (R) bezogen auf den Träger (10) zwischen einer Ruhestellung, in der das Drehelement (42) von dem Riemen (30) entfernt ist, und einer Arbeitsstellung zu drehen, in der das Drehelement (42) den Riemen (30) berührt, wobei gilt, dass der Riemen (30) in der Arbeitsstellung auf das Drehelement (42) eine Kraft ausübt, deren Richtung den Spanner (40) in dieselbe vorgegebene Drehrichtung (R) drehen lässt;
- Mittel (50, 51, 61, 60, 62) zum Verhindern, dass sich der Spanner (40) in der vorgegebenen Drehrichtung (R) über seine Arbeitsstellung hinaus dreht;
**dadurch gekennzeichnet, dass** die Anordnung, um den Spanner (40) bezogen auf den Träger (10) zwischen der Ruhestellung und der Arbeitsstellung des Spanners drehen zu lassen, Folgendes umfasst:
- mindestens ein geschlossenes Langloch (410, 411), das an der Platte (41) des Spanners (40) oder an dem Träger (10) angeordnet ist, wobei das geschlossene Langloch (410) eine Form aufweist, die derart gestaltet ist, dass beim Drehen des Spanners (40) bezogen auf den Träger (10) zwischen seiner Ruhestellung und seiner Arbeitsstellung die von dem Spanner (40) vollzogene Drehbewegung nicht kreisförmig ist;
- mindestens ein Mittel (60, 61) zum Zusammenwirken mit dem oder jedem geschlossenen Langloch (410, 411), wobei dieses Mittel zum Zusammenwirken (60, 61) bezogen auf den Träger (10) fest ist, wenn sich das geschlossene Langloch (410, 411) an der Platte (41) befindet, oder bezogen auf die Platte (41) fest ist, wenn sich das geschlossene Langloch am Träger befindet.

2. Anordnung nach Anspruch 1, **dadurch gekennzeichnet, dass** das geschlossene Langloch (410) eine der folgenden Formen aufweist: V-Form, Form, die mindestens einen gebogenen Abschnitt und einem geraden Abschnitt umfasst, gebogene Form, die keinen Kreisbogen definiert, beispielsweise eine Spiralform, Form, die mindestens zwei gebogene Abschnitte, beispielsweise eine dreilappige Form umfasst.

3. Anordnung nach einem der vorstehenden Ansprüche, **dadurch gekennzeichnet, dass** mindestens zwei Mittel (60, 61) zum Zusammenwirken mit dem geschlossenen Langloch (410) vorgesehen sind, wobei jedes Mittel zum Zusammenwirken (60, 61) bezogen auf den Träger (10) fest ist, wenn sich das geschlossene Langloch (410) an der Platte (41) befindet, oder bezogen auf die Platte (41) fest ist, wenn sich das geschlossene Langloch (410) am Träger (10) befindet.

4. Anordnung nach Anspruch 1, **dadurch gekennzeichnet, dass** sie mindestens zwei geschlossene Langlöcher (410, 411) umfasst, die an der Platte (41) oder an dem Träger (10) angeordnet sind.

5. Anordnung nach dem vorstehenden Anspruch, **dadurch gekennzeichnet, dass** die beiden geschlossenen Langlöcher (410, 411) derart angeordnet sind, dass beim Drehen des Spanners (40) bezogen auf den Träger (10) zwischen seiner Ruhestellung und seiner Arbeitsstellung die von dem Spanner (40) vollzogene Drehbewegung nicht kreisförmig ist.

6. Anordnung nach Anspruch 4 oder 5, **dadurch gekennzeichnet, dass** die beiden geschlossenen Langlöcher (410, 411) unterschiedliche Formen aufweisen, beispielsweise bei dem ersten geschlossenen Langloch eine gebogene Form und bei dem zweiten geschlossenen Langloch eine geradlinige Form.

7. Anordnung nach einem der Ansprüche 4 bis 6, **dadurch gekennzeichnet, dass** mindestens ein Mittel (60, 61) zum Zusammenwirken mit jedem geschlossenen Langloch (410, 411) vorgesehen ist, wobei jedes Mittel zum Zusammenwirken (60, 61) bezogen auf den Träger (10) fest ist, wenn sich jedes geschlossene Langloch (410, 411) an der Platte (41) befindet, oder bezogen auf die Platte (41) fest ist, wenn sich jedes geschlossene Langloch (410, 411) am Träger (10) befindet.

8. Anordnung nach einem der vorstehenden Ansprüche, **dadurch gekennzeichnet, dass** die Mittel (50, 51, 60, 61) zum Verhindern, dass sich der Spanner (40) in der vorgegebenen Drehrichtung (R) über seine Arbeitsstellung hinaus dreht, einen Anschlag (50) umfassen, der von einem Ende des geschlossenen Langloches oder von mindestens einem der geschlossenen Langlöcher (410, 411) gebildet wird, der jegliche Bewegung des Mittels zum Zusammenwirken (60, 61) mit dem geschlossenen Langloch blockiert.

9. Anordnung nach einem der Ansprüche 1 bis 7, **dadurch gekennzeichnet, dass** sie weiter ein offenes Langloch (412) umfasst, das an der Platte (41) angeordnet ist, wobei der Boden dieses offenen Langloches dann einen Anschlag (51) bildet, der in der Lage ist, mit einem Mittel zum Zusammenwirken (62) für dieses offene Langloch zusammenzuwirken, das an dem festen Träger (10) vorgesehen ist.

10. Anordnung nach einem der vorstehenden Ansprüche, **dadurch gekennzeichnet, dass** sie mindestens ein Mittel (60, 61, 62, 70) zum Fixieren der Position der Platte (41) des Spanners (40) bezogen auf den Träger (10) umfasst, wenn sich der Spanner (40) in der Arbeitsstellung befindet.

11. Anordnung nach dem vorstehenden Anspruch, **dadurch gekennzeichnet, dass** das Mittel zum Fixieren dieser Position mindestens eins der Mittel zum Zusammenwirken (60, 61, 62) mit dem oder jedem (410, 411) geschlossenen Langloch oder mit dem offenen Langloch (412) umfasst.

12. Anordnung nach Anspruch 10 oder 11, **dadurch gekennzeichnet, dass** zum Fixieren dieser Position ein Fixiermittel (70) vorgesehen ist, bei dem es sich um ein anderes Mittel als ein Mittel zum Zusammenwirken mit dem oder jedem geschlossenen Langloch oder dem offenen Langloch handelt, wobei dieses Fixiermittel (70) beispielsweise die Platte (41) im Bereich der festen Drehachse (420) des Drehelements (42) in Bezug auf die Platte (41) durchquert und in den Träger (10) eingeführt wird.

## Claims

1. An assembly including:
- a stationary support (10), such as an engine block,
- a plurality of pulleys (20, 21, 22) rotatably mounted on the support (10),
- a belt (30) mounted on said pulleys (20, 21, 22),
- a tensioner (40), including:
∘ a plate (41),
∘ a rotating element (42) mounted on the plate (41) by means of a rotation axis (420) stationary relative to that plate,
the tensioner (40) being able to rotate relative to the support (10), in a predefined rotation direction (R), between an idle position in which the rotating element (42) is moved away from the belt (30) and an operating position in which the rotating element (42) is in contact with the belt (30), having specified that, in the operating position, the belt (30) exerts a force on the rotating element (42), the direction of that force tending to cause the tensioner (40) to rotate in that same predefined rotation direction (R);
- means (50, 51, 61, 60, 62) for preventing the tensioner (40) from rotating in the predefined rotation direction (R) past its operating position;
**characterized in that**, in order to rotate the tensioner (40) relative to the support (10) between the idle position and the operating position of the tensioner, the assembly comprises:
- at least one closed aperture (410, 411) positioned on the plate (41) of the tensioner (40) or on the support (10), said closed aperture (410) having a shape arranged such that when the tensioner (40) rotates relative to the support (10) in its idle position and its operating position, the rotational movement performed by the tensioner (40) is not circular;
- at least one means (60, 61) for cooperating with the or each closed aperture (410, 411), this cooperating means (60, 61) being stationary relative to the support (10) when the closed aperture (410, 411) is situated on the plate (41) or stationary relative to the plate (41) when the closed aperture is situated on the support.

2. The assembly according to the preceding claim, **characterized in that** the closed aperture (410) has one of the following shapes: V shape, shape including at least one curved part and one linear part, curved shape not defining an arc of circle, for example a spiral shape, shape including at least two curved parts, for example a tri-lobe form.

3. The assembly according to one of the preceding claims, **characterized in that** it provides at least two means (60, 61) for cooperating with the closed aperture (410), each cooperating means (60, 61) being stationary relative to the support (10) when the closed aperture (410) is situated on the plate (41) or stationary relative to the plate (41) when the closed aperture (410) is situated on the support (10).

4. The assembly according to claim 1, **characterized in that** it comprises at least two closed apertures (410, 411) positioned on the plate (41) or on the support (10).

5. The assembly according to one of the preceding claims, **characterized in that** the two closed apertures (410, 411) are arranged such that when the tensioner (40) rotates relative to the support (10) between its idle position and its operating position, the rotational movement done by the tensioner (40) is not circular.

6. The assembly according to one of claims 6 or 7, **characterized in that** the two closed apertures (410, 411) have different shapes, for example a curved shape for the first closed aperture and a straight shape for the second closed aperture.

7. The assembly according to one of claims 6 to 8, **characterized in that** it provides at least one means (60, 61) for cooperating with each closed aperture (410, 411), each cooperating means (60, 61) being stationary relative to the support (10) when each closed aperture (410, 411) is situated on the plate (41) or stationary relative to the plate (41) when each closed aperture (410, 411) is situated on the support (10).

8. The assembly according to one of the preceding claims, **characterized in that** the means (50, 51, 60, 61) for preventing the tensioner (40) from rotating in the predefined rotation direction (R) past its operating position comprise a stop (50) formed by an end of the or at least one of the closed aperture(s) (410, 411), which blocks any movement of the cooperating means (60, 61) with the closed aperture.

9. The assembly according to one of claims 1 to 9, **characterized in that** it further comprises an open aperture (412) positioned on the plate (41), the bottom of this open aperture then forming a stop (51) able to cooperate with cooperating means (62) for that open aperture, provided on the stationary support (10).

10. The assembly according to one of the preceding claims, **characterized in that** it comprises at least one means (60, 61, 62, 70) for fixing the position of the plate (41) of the tensioner (40) relative to the support (10), when the tensioner (40) is in the operating position.

11. The assembly according to the preceding claim, **characterized in that** the means for fixing this position comprises at least one of the cooperating means (60, 61, 62) with the or each (410, 411) closed aperture or with the open aperture (412).

12. The assembly according to one of claims 12 or 13, **characterized in that**, to fix this position, a fixing means (70) is provided other than the cooperating means with the or each closed aperture or the open aperture, this fixing means (70) for example crossing through the plate (41) at the stationary rotation axis (420) of the rotating element (42) relative to the plate (41) and being inserted in the support (10).
